# EUROPEAN PATENT APPLICATION

(11) **EP 1 391 312 A1**
(43) Date of publication of application: **25.02.2004**
(21) Application number: 03255030.3
(22) Date of filing: 13.08.2003
(51) Int. Cl.: B41M 5/00, C09D 11/00, C07H 3/00

(54) **Solution for pre-treatment of substrate for ink-jet printing**

(30) Priority: 22.08.2002 US 225944
(71) Applicant: Scitex Digital Printing, Inc., Dayton, Ohio 45420-4099 (US)
(72) Inventor: Botros, Raouf, Centerville Ohio 45459 (US); Tobias, Russell H., Centerville Ohio 45458 (US); Rahman, Lutfar, Beavercreek Ohio 54534 (US)
(74) Representative: White, Duncan Rohan

(57) **Abstract**

A substrate coating is provided for application in association with ink jet ink imaging on the substrate. The coating material, for application on a printable substrate for use with an ink jet printing system, includes a substrate property enhancing component, a surfactant, and deionized water. When the coating material is applied to the printable substrate, prints are produced which have improved print quality. The coating can result in enhanced permanence of black and specialty non-black color ink jet prints, when the substrate enhancing component is a polymer. The coating material of the present invention can also be applied to the porous substrate as a pre-print coating to reduce paper cockle and curl, when the substrate enhancing component is a polyhydroxy compound.

## Description

### Technical Field

The present invention relates to ink jet printing and, more particularly, to a treating material that when applied to a substrate prior to imaging with ink jet inks, results in enhanced substrate properties that produce prints with improved print quality.

### Background Art

In the ink jet printing art, a major ink/paper compatibility issue for aqueous inks is mechanical deformation of the paper. Bond papers are formed and dried in a process that locks in internal stresses. When paper fibers are wetted, as when printing occurs, the stresses are released, allowing the fibers to change position. Immediately after wetting, deformations of the paper sheet begin to grow until sufficient drying occurs to relock the fibers, usually into a deformed, objectionable state. The paper ends up being wrinkled, puckered, cockled, and curled.

A more serious problem resulting from cockle is misregistration of the drops, due to dimensional shifts in the parameter of the paper. In a process color press, drop placement of cyan, magenta, yellow and black must be precise in order to produce acceptable process color images.

Heavily inked areas lead to localized strains, called cockle, that are visible as puckered or dimpled areas. When it is severe, in addition to being aesthetically objectionable, the cockles may interfere with the printhead in the print area, smearing the image. A sheet may also develop a long-range deformation called curl, causing the sheet to roll up inwardly toward the image or outwardly away from the image. The development of both phenomena is influenced by the media manufacturing process, ink formulation, drying process, and bends in the paper path.

Another occurrence in ink jet printing is the smudging or bleeding of the image when subjected to moisture. This is a result of using water soluble dyes in the ink to ensure good runnability in continuous ink jet printers. Therefore, achieving improvement in permanence of the image becomes a necessity for ink jet business to grow in graphic arts, textiles, lottery, business forms and publishing industries.

Reduction of paper cockle and curl has been a challenge in aqueous ink formulations. For example, U.S. Patent No. 5,207,824 discloses an anti-cockling formulation using 25% 1,5 pentanediol in the ink as a means of reducing cockle and curl in the paper. The 824 patent emphasizes that a minimum of 25% of the anti-cockle agent is required in order to obtain the requisite reduction in paper cockle. However, a drawback with this approach is unacceptable show-through on the reverse side of the paper. This is particularly objectionable in book publishing, specifically when heavily inked graphics appear on one side of a paper, and text is to appear on the reverse side of the paper. Another serious problem with such an ink formulation is the deterioration in print quality in the form of edge raggedness of the print, a phenomenon again particularly objectionable in book publishing. Additional problems with such an ink formulation are prolonged drying on paper, higher viscosity of the ink which adversely affects jet stimulation, and slow drying ink on the charge leads which may cause shorts.

United States Patent No. 5,356,464, discloses anti-curl formulation using 1,3 diols, 1,3,5 triols, amino - 1,3 diols and polyoxyalkylene derivatives, at a range of 15-30% based on the total weight of the ink. Again, most of these compounds are highly viscous glycols which would result in similar drawbacks to those mentioned above. For these compounds which are solids, adding 15-30% solids would certainly adversely affect runnability of continuous ink jet inks which are very sensitive to percent solids in the ink. Inks which are high in percent solids crystalize out on the charge plate and the orifice plate and become difficult to keep clean. As a result, crooked jets and ink jet shorts occur.

It is seen then that there is a need for an improved method of reducing paper cockle and curl in continuous ink jet printing, particularly while enhancing image permanence.

### Summary of the Invention

This need is met by the treating material according to the present invention, wherein when the treating material is applied to a substrate to give the substrate enhanced properties for improving resultant print quality. When the treated paper is imaged with inkjet inks, waterfast prints can be produced having reduced paper cockle and curl.

In accordance with one aspect of the present invention, a treating material for application on a printable substrate for use with an ink jet printing system comprises a solution of a substrate property enhancing component, a surfactant, and water. When the treating material is applied to the printable substrate, prints are produced which have improved print quality.

Other objects and advantages of the invention will be apparent from the following description and the appended claims.

### Detailed Description of the Invention

The present invention proposes a treating material for application on a printable substrate. Significant reduction in paper curl and cockle can be achieved by pre-treating the paper with a solution of crystalline polyhydroxy compound as the substrate property enhancing component, along with the surfactant and deionized water. A thickening agent can be optionally included to adjust the viscosity of the treating fluid to accommodate various printing applications.

The crystalline polyhydroxy compound can be dihydroxy compounds such as Neopentyl Glycol, trihydroxy compounds such as 1,1,1 - Tris (hydroxymethyl) aminomethane, Tricine, Trisethane, Trispropane or 1, 3, 5 Tris (-2 hydroxyethyl) cyanuric acid; tetrahydroxy compounds such as Erythritol; pentahydroxy compounds such as Xylitol; or hexahydroxy compounds such as L-Sorbitol. These crystalline polyhydroxy compounds are used from 15% to 40% in the treating composition. A mixture of more than one polyhydroxy compound may be used in the treating composition.

The surfactant is included in the composition of the treating material to enhance the wetting of the treating material to the substrate. Hence, the function of the surfactant in the treating composition is to maintain surface tension of the treating material fluid between 35 and 45 dynes-cm. A treating material with a higher surface tension may not wet some papers uniformly and may tend to bead up on the surface of the paper. If the surface tension of the treating fluid is too low, wetting and coverage of the paper may be acceptable. However, printing on paper with high surface tension inks could produce poor print quality due to poor ink wetting. The surfactant can be any nonionic surfactant such as SURFYNOL 465, SURFYNOL TGE and SURFYNOL 104E, all commercially available from Air Products. In a preferred embodiment, the surfactant is used from 0.05 to 0.30%.

Certain formulations of the treating material can also greatly improve the printed image permanency when subjected to moisture. For example, when the substrate property enhancing component is a polymer, such as ethoxylated polyethyleneimine, the image permanence is greatly enhanced by applying the treating material to the printable substrate.

The polymer cross-links to the dye in the ink jet ink. The polymer can be polyethyleneimine or hydroxyalkylated polyethyleneimine such as ethoxylated derivative (EPI) propoxylated derivative or chlorohydrin derivative of polyethyleneimine. In a preferred embodiment of the present invention, the polymer is EPI from 1 to 20% of a 37% commercial solution, such as is supplied by BASF under the trade name LUPASOL SC 61 B. The polymer raises the viscosity of the treating solution to provide increased color vibrance.

An electrolyte can be included in the treating material formulation to lower the solubility of the ink into the treating material. The electrolyte can be any water soluble inorganic salt, such as, for example, sodium sulfate or ammonium sulfate. The addition of salt to the treating solution decreases the solubility of the dye in the aqueous solution to allow an effective polymer/dye interaction to occur. Ammonium sulfate has the added advantage of lowering the pH, thus enhancing polymer/dye interaction. Excessive amounts of electrolytes may compete with the dye in interacting with the polymer, thus reducing permanence of the image.

Other additives that are optionally included in the vehicle of the invention are a lower aliphatic alcohol from 0-10% such as ethanol or IPA, and a biocide such as 1,2 - Benzoisothiazolin-2 one from 0-0.3%.

The following examples illustrate various formulations for the pretreating solution of the present invention.

### Example 1

| | |
|---|---|
| Deionized Water | 73.9% |
| Lupasol SC 61B | 5.0% |
| Trisethane | 20.0% |
| Surfynol 465 | 0.1% |
| Ammonium Sulfate | 1.0% |

### Example 2

| | |
|---|---|
| Deionized Water | 78.9% |
| Lupasol SC 61B | 20.0% |
| Surfynol 465 | 0.1% |
| Ammonium Sulfate | 1.0% |
| | |

### Example 3

| | |
|---|---|
| Deionized Water | 69.85% |
| Trisethane | 30.0% |
| Surfynol 104E | 0.05% |
| Guar Gum | 0.1% |
| | |

Several sheets of Champion Commodity Paper, commercially available under the trade name Champion Multipurpose #20, were sprayed on one side or both sides with the treating solutions formulated in accordance with the Examples above, and allowed to dry. The papers were then imaged on a drum with Scitex VersaPure 2003 Process Color II Black Ink, using a VersaMark Printhead. The papers were printed at 100%, 200%, 300% and 400% coverage levels on one side or both sides to simulate printing with four process colors.

For images printed on papers sprayed with the treating solution of Example 1, the resulting printed papers were flat, with no sign of curling. In addition, the graphic portion where cockling usually appears worst, did not show any sign of cockling. Untreated paper printed with the same ink showed objectionable curling and cockling, especially at 300% and 400% ink concentrations. The treating material composition of Example 1 includes two substrate property enhancing components, namely a polyhydroxy compound (trisethane) and a polymer (Lupasol). The inclusion of the polyhydroxy compound results in a significant reduction in paper curl and cockle, as compared to the same print on an uncoated substrate; and the inclusion of the polymer results in a significant improvement in image permanency, as compared to the same print on an uncoated substrate.

In the treating solution formulated in accordance with Example 2, the substrate property enhancing component is a polymer, Lupasol, resulting in a print quality improvement in image permanency. The treating solution of Example 2 has a slightly higher viscosity (on the order of 2.4 centipoise) than the treating solution formulated in accordance with Example 1. The higher viscosity allows more treating fluid to remain on the surface of the paper, which results in more ink interacting with the polymer and remaining on the surface. As a result, images produced using the treating solution of Example 2 have even greater improved image permanency than the images produced using the treating solution of Example 1. The images produced using the treating solution of Example 2 were darker and more vibrant than images produced using the treating solution of Example 1. While the images produced from Example 1 may be slightly less vibrant than those produced from Example 2, the images produced from Example 1 have a significant reduction in paper cockle and curl, a print quality enhancement not addressed by the formulation of Example 2.

The treating solution of Example 3 has no polymer, resulting in a loss of image permanency. However, if anti-cockling is the main objective in a particular printing application, the substrate property enhancement component of trisethane in Example 3 provides excellent anti-cockle reduction of images printed on substrates coated with the Example 3 formulation. The treating material of Example 3 also includes guar gum, as a thickening agent. The guar gum in Example 3 can be any available guar gum suitable for the specific purposes, such as commercially available guar gum from Tic Gums, Inc. In a preferred embodiment, the guar gum is present in an amount of about 0.1% to 1.0% by weight. However, thickening agents may be used in varying amounts to adjust the viscosity of the treating fluid to accommodate various printing applications.

Both treated and untreated printed papers were subjected to a waterfastness test by dipping them in water for one minute and allowing them to dry, then measuring their optical densities and comparing them with the image's optical densities before dipping in water. The treated papers having a treating material that included a polymer as the substrate property enhancing component retained greater than 90% of the image intensity, while the untreated paper retained less than 50% of the original image intensity before dipping in water.

When precoated with a treating solution having a polyhydroxy compound as the substrate enhancing component, the resulting printed paper exhibits properties of reduced cockle and curl, as compared to untreated papers.

The treating solution of the present invention may be applied by any suitable means, such as, for example, by spraying, roller arrangement, or application by a printhead positioned inline with the ink-applying printheads.

Paper treating formulations can be utilized as part of the paper making process. The paper treating can be done as an internal additive or an external additive. For an internal additive, the treating components of the invention can be added to fiber slurry or pulp solution prior to the formation of the paper sheet in the wire and felt press process. The components must be added via a method to allow the pulp fibers to retain these components. It can be assumed that this can be done with the components included with the internal sizing or starch solution.

The preferred method would include adding the treating components as part of a treating solution that would be coated onto the paper as part of an external size press, nip coater, roll coater, gravure coater, curtain coater, or the like means. A treating solution formulated in accordance with the present invention can be formulated to a viscosity level to match the treating method for homogeneous treating material coverage.

Pre-coat application of the treating material of the present invention can provide the advantage of eliminating color-to-color bleed during imaging, since the dyes are fixed instantaneously as the ink contacts the pre-coated substrate. Furthermore, with pre-treating, resulting images can be darker and have sharper edge definition, since the treating material minimizes ink penetration and allows more fixed dyes on the surface. This would also minimize image showthrough on the back side of the paper which is very much in demand for book publishing. Finally, complete drying of the pre-coated substrate may not be necessary. Therefore, drying can be applied once after imaging, resulting in considerable savings in energy.

Imaging can be done on a continuous web of paper, wherein the paper is subjected to the treating material of the present invention. The various color heads are positioned behind each other so that they image sequentially on the paper as it passes underneath the head. In order to obtain high quality color images, multiple drops of each color ink are printed at each pixel location. The jet spacing is 240-300 dpi with an orifice diameter of 0.7 to 0.9 mil. The stimulation frequency is 100 kHz and all heads are synchronized. The web speed is typically 200-500 feet per minute accurately controlled.

As will be obvious to anyone skilled in the art, the components that comprise the treating material are commercially available. It is also understood and known in the art that waterfastness is dye specific, resulting in variations in the amount of waterfastness achieved, particularly when varying the inks being applied to the substrate. Almost all ink jet inks applied on a variety of commodity substrates give vastly varying image quality. Differences occur in optical density, brilliance, permanence, drying and dot resolution. The substrate treating composition of the present invention is particularly adaptable for printing permanent images on paper.

The invention has been described in detail with particular reference to certain preferred embodiments thereof, but it will be understood that modifications and variations can be effected within the spirit and scope of the invention.

## Claims

1. A substrate treatment for enhancing print quality of ink jet imaging on the substrate, the treatment comprising a solution of at least one substrate property enhancing component selected from the group consisting of a polymer and a crystalline polyhydroxy compound, a surfactant, and water.

2. A substrate treatment as claimed in claim 1 wherein the polymer comprises ethoxylated polyethyleneimine.

3. A substrate treatment as claimed in claim 2 wherein the ethoxylated polyethyleneimine comprises from about 1% to 20% by weight, based on a commercial solution.

4. A substrate treatment as claimed in claim 1 wherein the crystalline polyhydroxy compound comprises a trihydroxy compound.

5. A substrate treatment as claimed in claim 4 wherein the trihydroxy compound comprises from about 15% to 40% by weight.

6. A substrate treatment as claimed in claim 1 wherein the surfactant is selected from the group consisting of nonionic, anionic and cationic surfactants.

7. A substrate treatment as claimed in claim 1 further comprising an electrolyte.

8. A substrate treatment as claimed in claim 1 further comprising a thickening agent.

9. A substrate treatment as claimed in claim 8 wherein the thickening agent comprises guar gum.

10. An imageable substrate treated with the substrate treatment as claimed in claim 1.
